# EUROPEAN PATENT APPLICATION

(11) **EP 0 987 573 A1**
(43) Date of publication of application: **22.03.2000**
(21) Application number: 98203147.8
(22) Date of filing: 18.09.1998
(51) Int. Cl.: G02B 6/44

(54) **Cross junction box**

(71) Applicant: Micropol Fiberoptic AB, 313 03 Aled (SE)
(72) Inventor: Andersson, Anders, 313 03 Äled (SE)
(74) Representative: Wallengren, Yngvar

(57) **Abstract**

The disclosure relates to a cross junction box for a fibre optic cable with a number of fibre conductors (13). The front panel (2) of the box has a terminal for each fibre conductor (13). The terminals are, in their turn, placed each on a holder (5) which may be drawn out to a service position. In the service position, the end of the fibre conductor (13) and its connecting means are located outside the front panel (2). Within the box, the fibre conductors (13) are held discrete from the shanks (8) of the holders (5) by a plate (15) which is mounted a certain distance from the bottom (1) of the box.

A guide (19) is mounted on the plate (15). The guide (19) is strip shaped, with apertures (23) for each one of the fibre conductors (13). Each fibre conductor (13) is led in a loop (24) from the incoming or outgoing fibre optic cable (14), up through one of the apertures (23), the guide (19) and thence in a loop (25) to their connecting means.

## Description

### TECHNICAL FIELD

The present invention relates to a cross junction box for fibre optic cables with a number of fibre conductors, and comprising a front panel with a terminal for each fibre conductor or pair thereof, each terminal having, on the rear side of the front panel, connection means for connecting the fibre conductor.

### BACKGROUND ART

Cross junction boxes for fibre optic cables are previously known in the art and are employed in such contexts where the individual optic fibre conductors in each cable are to be capable of being interconnected with any optional fibre conductor in another cable.

To this end, the cross junction boxes have a front panel with a terminal for each fibre conductor or pair thereof. In such instance, the fibre conductor is connected interiorly in the cross junction box to a coupling device on the terminal, it being possible, on the outside of the cross junction box, to conned a "jump terminal" consisting of a fibre conductor to another terminal either in the actual cross junction box or in another, proximal cross junction box.

Fibre optics are extremely sensitive as regards precision, attack by dirt and possible movements or play in couplings, connections etc. For this reason, it often happens that the coupling device between the terminal and a specific fibre conductor must be opened so that the coupling device and the end of the fibre conductor can be cleaned or adjusted. In a junction box with 24 or 28 connecting devices and as many fibre conductors, it is close to impossible to access and service a fibre conductor and a corresponding connecting device without the traffic being disrupted on adjacent fibre conductors. Further, the purely physical accessibility for the coupling devices and the individual fibre conductors is extremely limited.

While the junction box proper is open upwards and as a unit is withdrawable from the rack in which it is generally mounted, accessibility is hardly improved for the fibre conductors and their coupling devices.

### PROBLEM STRUCTURE

The present invention has for its object to design the cross junction box intimated by way of introduction in such a manner that service of individual fibre conductors and their coupling devices is greatly facilitated. The present invention also has for its object to design the cross junction box in such a manner that the risk of disruption to fibre conductors in operation is reduced to a extremely high degree or entirely obviated in connection with service on another fibre conductor or its coupling device. Finally, the present invention has for its object to design the cross junction box such that it will be simple and economical in manufacture and aesthetically attractive.

### SOLUTION

The objects forming the basis of the present invention will be attained if the cross junction box disclosed by way of introduction is characterized in that the terminals each have their own holder which is individually withdrawable to a service position outside the front panel, and that in this position and end portion of the relevant fibre conductor or pair thereof and their coupling devices are located outside the front panel.

Further advantages will be attained if the cross junction box is also given one or more of the characterizing features as set forth in appended Claims 2 to 6.

### BRIEF DESCRIPTION OF THE ACCOMPANYING DRAWINGS

The present invention will now be described in greater detail hereinbelow with reference to the accompany Drawings. In the accompanying Drawings:
- Fig. 1: is a perspective view of a cross junction box according to the present invention;
- Fig. 2: shows the cross junction box according to Fig. 1 seen obliquely from the inside, the placing of a fibre conductor being shown; and
- Fig. 3: is an exploded view of the cross junction box of Figs. 1 and 2.

### DESCRIPTION OF PREFERRED EMBODIMENT

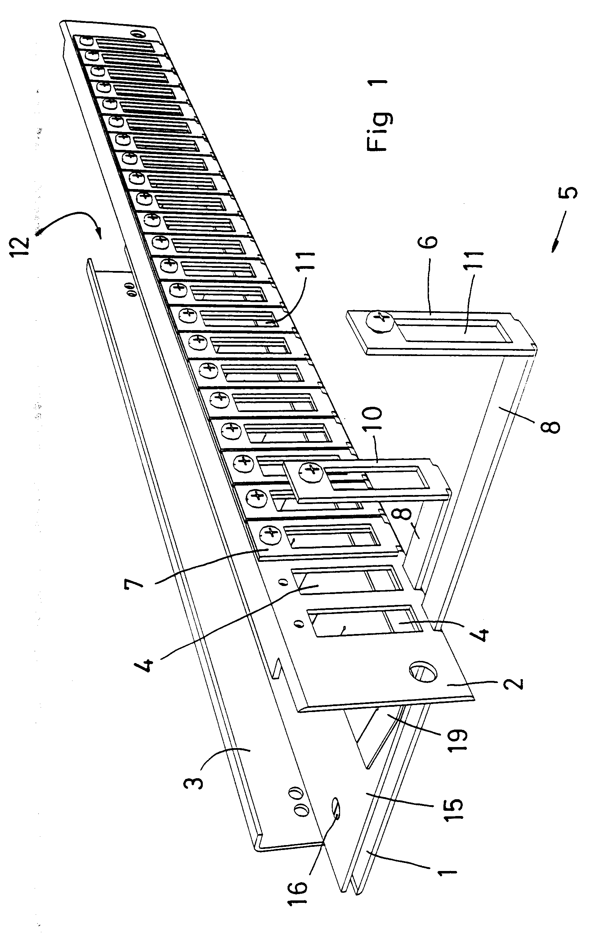

In Fig. 1, reference numeral 1 relates to the bottom of a cross junction box which has a front panel 2 and a rear or inner defining wall 3. The inner wall 3, the bottom 1 and the front panel 2 may be manufactured, for example, from sheet material or be in the from of an extruded aluminium profile.

It will be apparent from the Drawing that the front panel 2 has a series of openings 4 which, in the illustrated embodiment, are aligned in a row of twenty-four. The openings 4 are intended for mounting of terminals designed in such a manner that, on the front side of the front panel 2, they display connecting devices for a fibre optic jump connection and that on the inside of the front panel, they have coupling devices for connection of a fibre conductor. Preferably, the terminals are designed as double terminals which, in positions over one another, can connect two fibre conductors.

In connection with each opening 4 in the front panel 2, there is provided a holder 5 which has a short shank 6 which is designed as holder or retainer shank for mounting the terminal and which has a rear side which is intended to be able to abut against the outside of the front panel 2. This is shown, for example, at reference numeral 7.

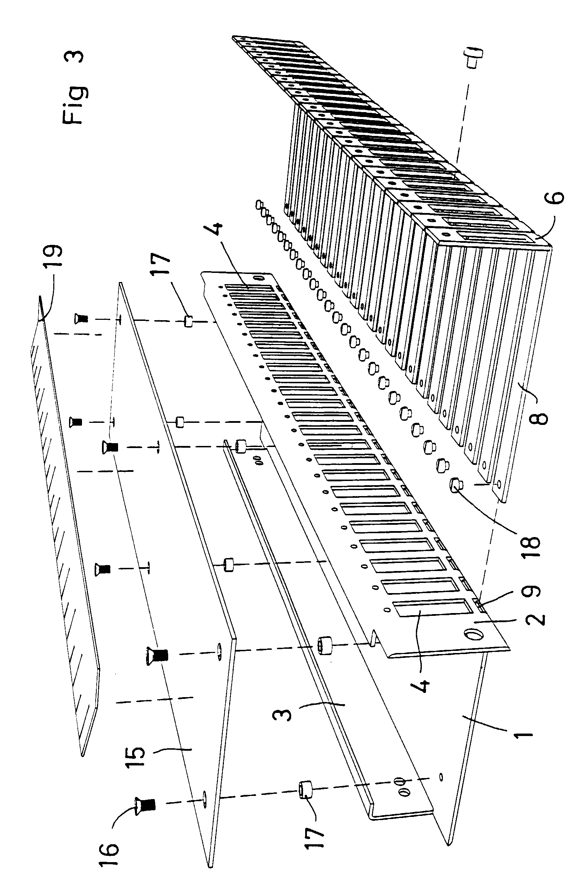

Each holder 5 further displays a lower or horizontal shank 8 which functions as withdrawal shank and which extends through an opening 9 in the front panel 2 (see Fig. 3). The lower shank 8 is slidable through the opening between the operational position intimated at reference numeral 7 and the withdrawal or service position at reference numeral 6. An intermediate position is intimated by reference numeral 10.

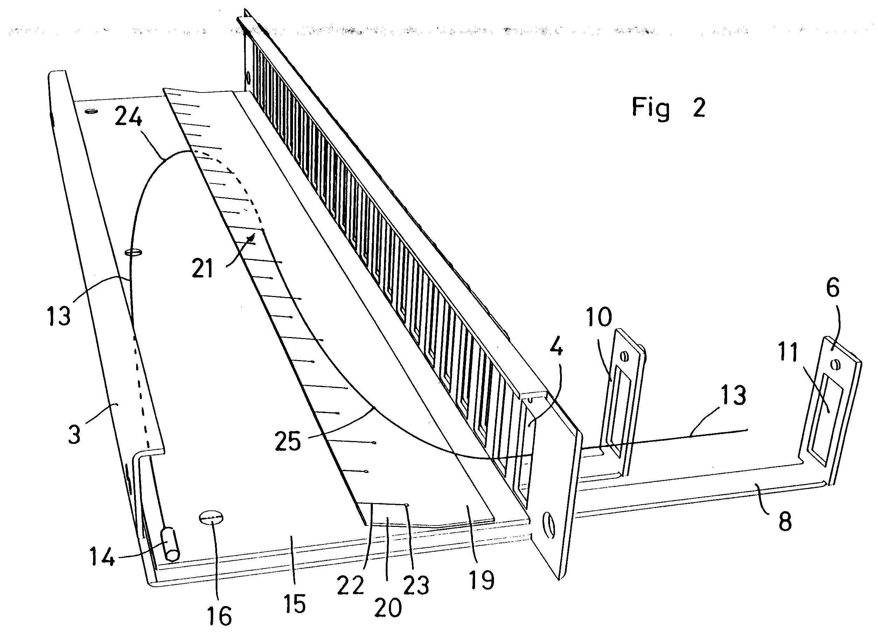

The shanks 6, 7 and 10 on the holders 5 have apertures 11 which correspond to the openings 4 in the front panel 2. The above mentioned upwardly directed shanks in the holders 5 serve for mounting the previously mentioned terminals so that these are fixedly mounted on the holders. When the holder 5 is withdrawn to the service position, one or two fibre conductors extend through the opening 4 of the front panel and out to the coupling devices on the terminal (not shown on the Drawing). In Fig. 2, only one fibre conductor per holder is shown.

The cross junction box has interiorly a fibre conductor space 12 in which are located 24 or 48 (in the illustrated embodiment) fibre conductors 13 (see Fig. 2) which lie freely and extend out from one end of a fibre optic cable 14 (see Fig. 2). There is often a second ingoing/outgoing cable which is disposed at the opposing short side of the box and approximately mirror-reversed to that shown for the cable 14 and the fibre conductor 13. It will therefore readily be perceived that the space available interiorly in the fibre conductor space 12 is limited and, consequently, withdrawal or insertion of a lower shank 8 on a holder 5 could very easily mechanically affect and disrupt one or more of the fibre conductors 13. In order to prevent this, the lower shanks 8 are disposed on the under side of a plate 15 with a substantially planar and smooth upper side. It should, for example, be observed that the anchorage screws 16 of the plate 15 in the bottom 1 are countersunk. The plate 15 is retained at the correct distance above the bottom 1 by the intermediary of spacers 17 which are shown in Fig. 3.

In order to prevent complete withdrawal of the lower shanks 8 outside the front panel 2, the shanks are provided at their inner ends with suitable arrest means 18 in the form of screws (see Fig. 3). The screws 18 further serve to guide in the vertical direction the inner end of the lower shank 8 so that this may move substantially without play between the upper side of the bottom 1 and the underside of the plate 15.

In order that a fibre conductor 13 does not unnecessarily affect or mechanically disturb another fibre conductor on handling of any of the holders 5, but also to ensure that no individual fibre conductor 13 has too slight a radius of curvature, there is provided interiorly in the cross junction box a guide 19 for guiding the individual fibre conductors, the guide to each fibre conductor being provided with engagement means 21 such that the fibre conductors are restrictedly movable and displaceable in their longitudinal direction. However, the fibre conductors are well localised in relation to the guide and in relation to adjacent fibre conductors cooperating with the guide.

The guide 19 is strip shaped and is secured on the upper side of the plate 15 along the edge thereof running against the front panel 2. The guide 19 has an upwardly angled portion 20 which makes an acute angle with the upper side of the plate 15 and which is located a slight distance above it.

The above mentioned engagement means 21 in the guide 19 comprise a slot 22 which extends in from the edge of the guide facing away from the front panel 2 and which, in its inner end, has an aperture 23 whose transverse dimension or diameter is somewhat larger than the transverse dimension or diameter of the individual fibre conductor 13. It will be apparent from Fig. 2 that the slots 22 are disposed alternatingly with different lengths.

Fig. 2 shows how an individual fibre conductor 13 is passed interiorly in the cross junction box. From the incoming / outgoing fibre optic cable 14, the fibre conductor 13 extends along the edge of the plate 15 facing away from the front panel 2 in a loop away to the opposite short end of the plate 15. Here, the fibre conductor 13 turns back in a loop 24 and is located on the under side of the guide 19 in order to pass up through an aperture 23 in it. On the upper side of the guide 19, the fibre conductor then runs in a new loop 25 away to the incoming / outgoing cable 14 in order thence to be gently bent to a direction which is approximately at right angles to the plane of the front panel 2 and, in the service position, out through the opening 4 of the front panel 2.

In the operational position, i.e. with the holder 5 in the position shown by reference numeral 7, the fibre conductor 13 runs with its distal loop 24 in Fig. 2 closer to the distal end of the plate 15 in that the fibre conductor 13 has been displaced somewhat through the aperture 23. Correspondingly, the proximal loop 25 of the fibre conductor 13 will be more bent in a direction towards the inner wall 3.

The present invention may be modified without departing from the scope of the appended Claims.

## Claims

1. A cross junction box for a fibre optic cable with a number of fibre conductors (13), comprising a front panel (2) with a terminal for each fibre conductor (13) or pair thereof, each terminal having, on the rear side of the front panel (2), connection means for connecting one or a pair, respectively, of fibre conductors, **characterized in that** the terminals each have a holder (5) which is individually withdrawable to a service position outside the front panel (2); and that in this position an end portion of the relevant fibre conductor (13) or pair thereof and its connection means are located outside the front panel (2).

2. The cross junction box as claimed in Claim 1, **characterized in that** the holders (5) have a shank (8) which extends into the interior of the box through an opening (9) in the front panel (2), and which is discrete from a fibre conductor space (12) via a plate (15) which has a substantially smooth surface facing towards the fibre conductor space.

3. The cross junction box as claimed in Claim 2, **characterized in that** the plate (15) is disposed via spacers (17) a distance from the bottom (1) of the box; and that at least certain portions (18) of the holders (5) are guided in the vertical direction between the under side of the plate (15) and the bottom (1) of the box.

4. The cross junction box as claimed in any of Claims 1 to 3, **characterized in that** a guide (19) is disposed for guiding the individual fibre conductors (13) in the interior of the box, the guide having engagement means (21) for movable cooperation with each fibre conductor (13).

5. The cross junction box as claimed in Claim 4, **characterized in that** the guide (19) is strip shaped and disposed on the upper side of the plate (15) along the edge thereof facing towards the front panel (2); that the guide (19), on its side facing away from the front panel (2), has a portion (20) which is located a distance above the plate (15); and that on this portion the engagement means (21) has an aperture (23) for each fibre conductor (13) for the through-passage thereof.

6. The cross junction box as claimed in Claim 5, **characterized in that** an incoming / outgoing cable (14) to the junction box is disposed at and directed along the edge of the plate (15) facing away from the front panel (2); and that each fibre conductor (13) from the cable (14) extends in a loop (24) away to the opposite end of the plate and on the under side of the guide (19), up through the allocated aperture (23) and thence on the upper side of the guide (19) in a loop (25) to the incoming / outgoing cable (14) and thence approximately at right angles to the front panel (2) to its respective connecting means.
